# EUROPEAN PATENT APPLICATION

(11) **EP 1 070 621 A2**
(43) Date of publication of application: **24.01.2001**
(21) Application number: 00115459.0
(22) Date of filing: 18.07.2000
(51) Int. Cl.: B60K 15/03, F16K 17/04

(54) **Multivalve for a vehicle gaseous fuel tank**

(30) Priority: 20.07.1999 IT TO990645
(71) Applicant: MTM- Meccanica Tecnica Moderna S.r.l., 12062 Cherasco (IT)
(72) Inventor: Ceratto, Danilo, 12051 Alba (IT)
(74) Representative: Eccetto, Mauro

(57) **Abstract**

A multivalve (1) for a vehicle gaseous fuel tank (2). The tank has a first portion (21) containing liquefied fuel, and a second portion (22) containing gaseous fuel. The multivalve is connected to the first portion of the tank by a ring nut (11), and has an outlet conduit (4) for drawing fuel from the first portion (21) of the tank (2), and a safety valve (10) in turn having a connecting conduit (15) communicating with the tank, and an exhaust conduit (16) communicating with the outside. The multivalve also has an elastically deformable pipe (25) made of elastomeric material, and which connects the connecting conduit (15) of the safety valve to the second portion (22) of the tank, so that, when predetermined maximum pressure and/or temperature values are exceeded, the pressure in the tank is reduced by exhausting gaseous fuel, as opposed to draining off liquid fuel.

## Description

The present invention relates to a multivalve for a vehicle gaseous fuel tank - in particular, for liquefied petroleum gas or so-called LPG - fitted with a safety valve.

As is known, for safety reasons, the tank must not be filled to capacity with liquefied fuel, but have a portion containing gaseous fuel.

Multivalves for vehicle LPG tanks comprise an outlet conduit for feeding liquid fuel to the engine, and which draws fuel by gravity from the portion of the tank containing liquefied fuel.

Known multivalves also comprise a safety device in turn comprising a safety valve and a melt assembly, which drain fuel from the tank when the pressure and temperature respectively inside the tank reach predetermined maximum values.

The safety valve normally comprises a movable shutter subjected to the opposing forces of the fluid pressure in the tank, and of a spring preloaded to a value corresponding with the maximum pressure value. When the maximum pressure value is reached, the shutter moves by an amount inversely proportional to the stiffness of the spring, so as to connect the tank to a drain opening.

For specific assembly reasons, the multivalve is currently fitted to the bottom portion of the tank containing liquid fuel.

Consequently, both the outlet conduit and the safety valve draw from the portion of the tank containing liquefied fuel, so that, when the pressure in the tank rises, a large amount of liquid fuel is drained off, which, in the event of an accident, flares up and sets fire to both the vehicle and any surrounding objects.

Currently used safety valves are therefore far from satisfactory.

Moreover, in general, the design and location of known multivalves fail to provide for rapidly restoring safety conditions even when only small amounts of fluid are drained off by the safety valve.

It is an object of the present invention to provide a multivalve comprising a safety valve designed to eliminate the aforementioned drawbacks, and which, in particular, ensures a higher degree of safety as compared with known solutions, greatly reduces the risk of fire, is cheap to produce, and can be fitted easily in any position on any type of tank.

According to the present invention, there is provided a multivalve for a vehicle gaseous fuel tank; said tank comprising a first portion containing liquefied fuel, a second portion containing gaseous fuel, and connecting means for connecting said first portion of said tank to said multivalve; said multivalve comprising a structure; and said structure comprising an outlet conduit extending from said structure into said first portion of said tank, a safety valve, and a connecting conduit for connecting the inside of the tank to the outside; characterized by comprising circuit means for connecting said connecting conduit to said second portion of the tank.

A preferred, non-limiting embodiment of the present invention will be described by way of example with reference to the accompanying drawings, in which:
Figure 1 shows a front view of a preferred embodiment of the multivalve according to the present invention and as fitted to a tank;
Figure 2 shows a partly sectioned side view of the Figure 1 multivalve.

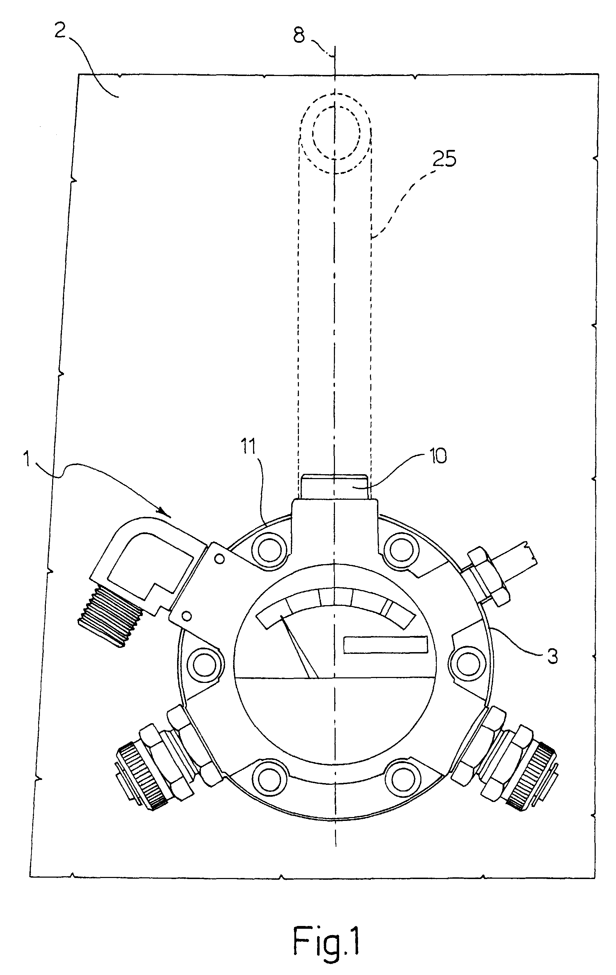

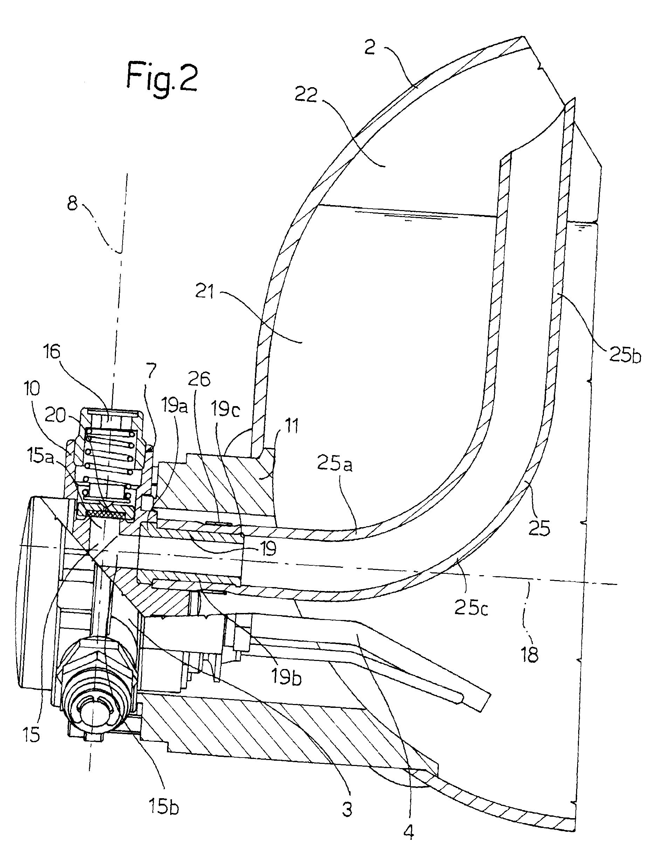

With reference to Figures 1 and 2, number 1 indicates as a whole a multivalve for a vehicle gaseous fuel tank 2.

Tank 2 comprises a first portion 21 filled with liquefied fuel; a second portion 22 containing gaseous fuel; and a ring nut connecting the multivalve to first portion 21 of tank 2.

The multivalve comprises a structure 3, which defines a seat 7 for a safety valve 10, and a known outlet conduit 4 extending from structure 3 into first portion 21. Seat 7 extends along an axis 8.

Safety valve 10, for exhausting the gaseous fuel from tank 2 when the temperature or pressure in tank 2 reaches predetermined maximum safety values, communicates with the inside of the tank via a connecting conduit 15, and with the outside via an exhaust conduit 16, and comprises a shutter 20.

More specifically, shutter 20 is housed inside seat 7, between connecting conduit 15 and exhaust conduit 16, and is movable between a closed position and an open position permitting fuel flow between the conduits.

Exhaust conduit 16 extends along axis 8, while connecting conduit 15 is elbow-shaped and defined by a lateral wall comprising a first portion 15a extending along axis 8, and a second portion 15b extending along an axis 18 perpendicular to axis 8.

Conduit 15 is defined by a tubular body 19, which extends along axis 18 from portion 15b and comprises an end portion 19a connected integrally to structure 3, a second end portion 19c defining an outer projection, and a cylindrical intermediate portion 19b.

Tubular body 19 is fitted with an L-shaped pipe 25 comprising a first portion 25a, which extends along axis 18 and surrounds and is clamped to the intermediate portion of tubular body 19 by a clamp 26; a second portion 25b, which extends upwards, in use, preferably in a direction perpendicular to the surface of the liquid fuel, and is of such a length as to extend partly inside second portion 22 of tank 2 containing gaseous fuel; and an elbow-shaped third connecting portion 25c.

More specifically, pipe 25 is made of elastomeric material, and is elastically deformable so as to recover its original shape following deformation.

In actual use, pipe 25 therefore connects portion 22 of tank 2, containing gaseous fuel, to connecting conduit 15, thus enabling shutter 20 to exhaust the gaseous fuel and so solve the aforementioned problems posed by drawing from the liquid fuel.

The further advantages of the multivalve according to the present invention will be clear from the foregoing description.

By exhausting fuel in gaseous phase from the tank, the amount of fuel expelled is much smaller than when draining off fuel in liquid phase, thus reducing the risk of fire.

Moreover, exhausting fuel in gaseous phase evaporates a portion of the fuel in liquid phase in the tank; and, being an endothermic process, evaporation reduces the temperature of the fuel and tank, thus further reducing the risk of fire.

A multivalve in accordance with the present invention can be assembled easily and adapted to any type of tank.

The pipe may be assembled before the multivalve is fitted to the tank. That is, being elastically deformable, the pipe may be adjusted to simplify assembly, and return to its original shape after assembly.

Clearly, changes may be made to the multivalve as described and illustrated herein without, however, departing from the scope of the present invention.

For example, the pipe may be made only partly of elastomeric material, or be made of plastic material and comprise a bellows portion; and the shape and location of the exhaust conduit and pipe may be other than as shown.

## Claims

1. A multivalve (1) for a vehicle gaseous fuel tank (2); said tank comprising a first portion (21) containing liquefied fuel, a second portion (22) containing gaseous fuel, and connecting means (11) for connecting said first portion of said tank to said multivalve; said multivalve (1) comprising a structure (3); and said structure comprising an outlet conduit (4) extending from said structure (3) into said first portion (21) of said tank, a safety valve (10), and a connecting conduit (15) for connecting the inside of the tank (2) to the outside; characterized by comprising circuit means (25) for connecting said connecting conduit (15) to said second portion (22) of the tank.

2. A multivalve as claimed in Claim 1, characterized in that said circuit means comprise a tubular body (25).

3. A multivalve as claimed in Claim 2, characterized in that said tubular body (25) is elastically deformable.

4. A multivalve as claimed in Claim 3, characterized in that said tubular body (25) is made of elastomeric material.

5. A multivalve as claimed in any one of Claims 2 to 4, characterized in that said tubular body (25) comprises at least one elbow portion (25c).

6. A multivalve as claimed in any one of Claims 2 to 5, characterized in that said tubular body (25) comprises a portion extending upwards in use.

7. A multivalve as claimed in any one of Claims 2 to 6, characterized in that fastening means (26) are provided for fastening said tubular body (25) to said connecting conduit (15).
